# EUROPEAN PATENT SPECIFICATION

(11) **EP 4 581 404 B1**
(45) Date of publication and mention of the grant of the patent: **05.08.2026**
(21) Application number: 22959696.0
(22) Date of filing: 19.09.2022
(51) Int. Cl.: G01V 1/30, G06F 30/27, G06N 20/00, G01V 20/00, G06N 5/025, G06F 111/10, G06F 119/02

(54) **AUTOMATED MACHINE LEARNING FAULT MODELING WITH GROUPING**
AUTOMATISCHE MASCHINENLERNFEHLERMODELLIERUNG MIT GRUPPIERUNG
MODÉLISATION AUTOMATISÉE DE FAILLES PAR APPRENTISSAGE AUTOMATIQUE AVEC REGROUPEMENT

(43) Date of publication of application: 09.07.2025
(73) Proprietor: Services Pétroliers Schlumberger, 75007 Paris (FR); Geoquest Systems B.V., 2586 BJ The Hague (NL)
(72) Inventor: LAVERNE, Thomas Guillaume, 34000 Montpellier (FR); LEVANNIER, Arnaud, 34000 Montpellier (FR)
(74) Representative: Schlumberger Intellectual Property Department
(86) International application number: PCT/US2022/076639
(87) International publication number: WO 2024/063797

(56) References cited:
- US-A1- 2004 193 960
- US-A1- 2008 225 640
- US-A1- 2013 231 903
- US-A1- 2013 294 197
- US-A1- 2013 294 197
- WU XINMING ET AL: "FaultNet3D: Predicting Fault Probabilities, Strikes, and Dips With a Single Convolutional Neural Network", IEEE TRANSACTIONS ON GEOSCIENCE AND REMOTE SENSING, IEEE, USA, vol. 57, no. 11, 1 November 2019 (2019-11-01), pages 9138 - 9155, XP011755726, ISSN: 0196-2892, [retrieved on 20191029], DOI: 10.1109/TGRS.2019.2925003
- L. SOUCHE ET AL: "An End-to End-Approach to Naturally Fractured Reservoir Modeling: Workflow and Implementation", EAGE/SEG RESEARCH WORKSHOP ON FRACTURED RESERVOIRS, INTEGRATING GEOSCIENCES FOR FRACTURED RESERVOIRS DESCRIPTION; 3-6 SEPTEMBER 2007; PERUGIA, ITALY, 3 September 2007 (2007-09-03), Netherlands, XP055617817, ISBN: 978-90-73781-53-5, DOI: 10.3997/2214-4609.20146718
- WU, X. ET AL.: "FaultNet3D: Predicting fault probabilities, strikes, and dips with a single convolutional neural network", IEEE TRANSACTIONS ON GEOSCIENCE AND REMOTE SENSING, vol. 57, no. 11, 2019, pages 9138 - 9155, XP011755726, DOI: 10.1109/TGRS.2019.2925003
- ASHRAF, U. ET AL.: "Application of unconventional seismic attributes and unsupervised machine learning for the identification of fault and fracture network", APPLIED SCIENCES, vol. 10, no. 11, 2020, pages 3864, XP055922602, DOI: 10.3390/app10113864

## Description

### Background

Oilfield exploration and production efforts generally include collecting data that represents a subsurface volume of interest, and then modeling the physical characteristics of the subsurface volume based on the data. There are many sources for such data, including seismic surveys and well logs. This data permits complex models to be built, which may depict the geology of the subsurface volume, fluid migration over time in the volumes, and other aspects. In general, the process of using collected data to generate a model can include automated and manual actions.

Subsurface volumes can include complex geometry, such as isolated faults and related faults, which interact with each-other. Modeling subsurface volumes with faults can be difficult to perform automatically. That is, the fault and fault interaction modeling part of structural modeling generally requires many manual actions on the part of the model builder.

An existing technique is disclosed in Wu Xinming et al, "FaultNet3D: Predicting Fault Probabilities, Strikes, and Dips with a Single Convolutional Neural Network", IEEE Transactions on Geoscience and Remote Sensing, vol. 57, no. 11, November 2019, pages 9138-9155.

Another existing technique is disclosed in L. Souche et al, "An End-to-End Approach to Naturally Fractured Reservoir Modeling: Workflow and Implementation", EAGE/SEG Research Workshop on Fractured Reservoirs, Integrating Geosciences for Fractured Reservoirs Description, 3-6 September 2007.

### Summary

The invention is defined by the independent claims. Advantageous features are defined by the dependent claims. Any aspects, embodiments or examples disclosed herein falling outside the scope of the claims are intended to be understood as examples useful for understanding the invention.

According to an aspect, a computer-implemented machine learning method according to claim 1 is provided.

According to another aspect, a computer system according to claim 9 is provided.

According to another aspect, a non-transitory computer readable medium according to claim 10 is provided.

### Brief Description of the Drawings

In the figures:
Figure 1 illustrates an example of a system that includes various management components to manage various aspects of a geologic environment.
Figure 2 illustrates a descriptor depiction of a set of faults partitioned into groups according to area, and a geometric depiction of the same set of faults with the same partitioning.
Figure 3 illustrates a descriptor depiction of a set of faults partitioned into groups according to azimuth and dip, and a geometric depiction of the same set of faults with the same partitioning.
Figure 4 illustrates a descriptor depiction of a set of faults partitioned into groups according to area, azimuth, and dip, and a geometric depiction of the same set of faults with the same partitioning.
Figure 5 illustrates a descriptor depiction of a set of faults partitioned into groups according to orientation, and a geometric depiction of the same set of faults with the same partitioning.
Figure 6 illustrates a descriptor depiction of a set of faults partitioned into groups according to area and orientation, and a geometric depiction of the same set of faults with the same partitioning.
Figure 7 illustrates a descriptor depiction of a set of faults partitioned into groups according to area, orientation, and eigenvalue, and a geometric depiction of the same set of faults with the same partitioning.
Figure 8 is a flowchart illustrating a computer implemented artificial intelligence method of modeling fault-related properties of a geological region based on automated partitioning, according to the invention.
Figure 9 illustrates various fault pair relationships.
Figure 10 is a flowchart illustrating a computer-implemented method of computer implemented artificial intelligence method of modeling fault-related properties of a geological region based on fault pair relationships, according to the invention.
Figure 11 illustrates a schematic view of a computing system in which the invention may be implemented.

### Detailed Description

Reference will now be made in detail to examples illustrated in the accompanying drawings and figures.

It will be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the present disclosure. The first object or step, and the second object or step, are both, objects or steps, respectively, but they are not to be considered the same object or step.

As used in this description and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

Some examples use artificial intelligence and fault grouping to simplify and automate the subsurface volume modeling workflow. According to an example, artificial intelligence is used to partition faults within a selected set of faults in a geological region into groups, such that faults within the same group that have similar descriptors. Grouping faults allows for bulk operations, like setting the same set of modeling parameters to each fault within a group of faults, in generating a model. Once a selected set of faults is partitioned into groups and a mapping from the groups to modeling parameters is assigned, the mapping is extrapolated to determine modeling parameters for faults that are not within the selected set of faults. The modeling parameters are incorporated into a model, thus simplifying the model generation process.

Pairs of faults within a selected set of faults in a geological region are mapped to relationships. The resulting map is applied to a pair of faults that is not in the initial selected set of faults to assign a relationship to the pair. The relationship is incorporated into a model as a modeling parameter, thus simplifying the model generation process.

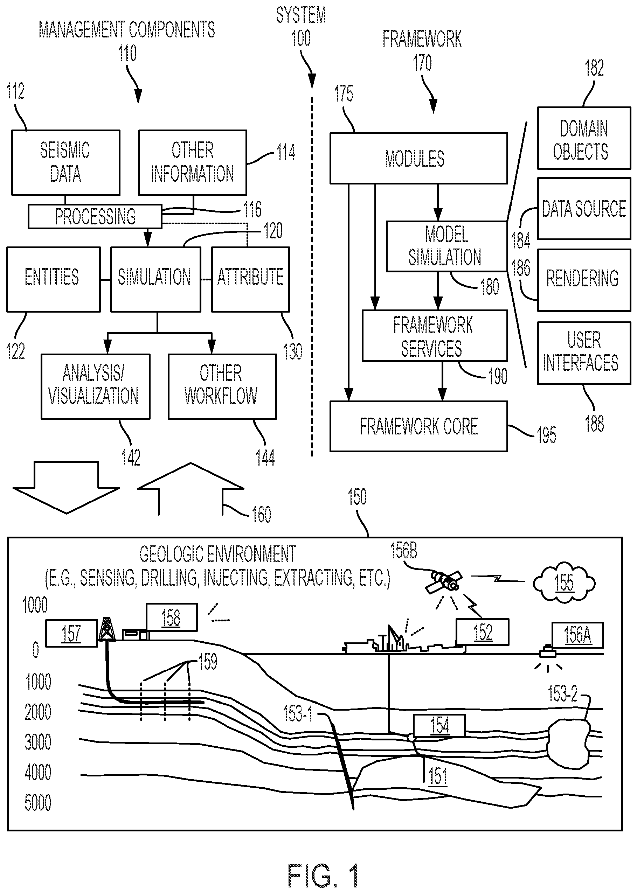

Figure 1 illustrates an example of a system 100 that includes various management components 110 to manage various aspects of a geologic environment 150 (e.g., an environment that includes a sedimentary basin, a reservoir 151, one or more faults 153-1, one or more geobodies 153-2, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of Figure 1, the management components 110 include a seismic data component 112, an additional information component 114 (e.g., well/logging data), a processing component 116, a simulation component 120, an attribute component 130, an analysis/visualization component 142 and a workflow component 144. In operation, seismic data and other information provided per the components 112 and 114 may be input to the simulation component 120, which models all or part of the geologic environment.

In an example, the simulation component 120 may rely on entities 122. Entities 122 may include earth entities or geological objects such as wells, surfaces, bodies, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114). An entity may be characterized by one or more properties (e.g., a geometrical pillar grid entity of an earth model may be characterized by a porosity property). Such properties may represent one or more measurements (e.g., acquired data), calculations, etc.

In an example, the simulation component 120 may operate in conjunction with a software framework such as an object-based framework. In such a framework, entities may include entities based on pre-defined classes to facilitate modeling and simulation. A commercially available example of an object-based framework is the MICROSOFT^{®} .NET^{®} framework (Redmond, Washington), which provides a set of extensible object classes. In the .NET^{®} framework, an object class encapsulates a module of reusable code and associated data structures. Object classes can be used to instantiate object instances for use in by a program, script, etc. For example, borehole classes may define objects for representing boreholes based on well data.

In the example of Figure 1, the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example, the simulation component 120 may construct one or more models of the geologic environment 150, which may be relied on to simulate behavior of the geologic environment 150 (e.g., responsive to one or more acts, whether natural or artificial). In the example of Figure 1, the analysis/visualization component 142 may allow for interaction with a model or model-based results (e.g., simulation results, etc.). As an example, output from the simulation component 120 may be input to one or more other workflows, as indicated by a workflow component 144.

As an example, the simulation component 120 may include one or more features of a simulator such as the ECLIPSE^{™} reservoir simulator (Schlumberger Limited, Houston Texas), the INTERSECT^{™} reservoir simulator (Schlumberger Limited, Houston Texas), etc. As an example, a simulation component, a simulator, etc. may include features to implement one or more meshless techniques (e.g., to solve one or more equations, etc.). As an example, a reservoir or reservoirs may be simulated with respect to one or more enhanced recovery techniques (e.g., consider a thermal process such as SAGD, etc.).

In an example, the management components 110 may include features of a commercially available framework such as the PETREL^{®} seismic to simulation software framework (Schlumberger Limited, Houston, Texas). The PETREL^{®} framework provides components that allow for optimization of exploration and development operations. The PETREL^{®} framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of modeling, simulating, etc.).

In an example, various aspects of the management components 110 may include add-ons or plug-ins that operate according to specifications of a framework environment. For example, a commercially available framework environment marketed as the OCEAN^{®} framework environment (Schlumberger Limited, Houston, Texas) allows for integration of add-ons (or plug-ins) into a PETREL^{®} framework workflow. The OCEAN^{®} framework environment leverages .NET^{®} tools (Microsoft Corporation, Redmond, Washington) and offers stable, user-friendly interfaces for efficient development. In an example, various components may be implemented as add-ons (or plug-ins) that conform to and operate according to specifications of a framework environment (e.g., according to application programming interface (API) specifications, etc.).

Figure 1 also shows an example of a framework 170 that includes a model simulation layer 180 along with a framework services layer 190, a framework core layer 195 and a modules layer 175. The framework 170 may include the commercially available OCEAN^{®} framework where the model simulation layer 180 is the commercially available PETREL^{®} model-centric software package that hosts OCEAN^{®} framework applications. In an example, the PETREL^{®} software may be considered a data-driven application. The PETREL^{®} software can include a framework for model building and visualization.

As an example, a framework may include features for implementing one or more mesh generation techniques. For example, a framework may include an input component for receipt of information from interpretation of seismic data, one or more attributes based at least in part on seismic data, log data, image data, etc. Such a framework may include a mesh generation component that processes input information, optionally in conjunction with other information, to generate a mesh with a specified coarseness.

In the example of Figure 1, the model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

As an example, the domain objects 182 can include entity objects, property objects and optionally other objects. Entity objects may be used to geometrically represent wells, surfaces, bodies, reservoirs, etc., while property objects may be used to provide property values as well as data versions and display parameters. For example, an entity object may represent a well where a property object provides log information as well as version information and display information (e.g., to display the well as part of a model).

In the example of Figure 1, data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of Figure 1, the geologic environment 150 may include layers (e.g., stratification) that include a reservoir 151 and one or more other features such as the fault 153-1, a pair of faults, the geobody 153-2, etc. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, Figure 1 shows a satellite in communication with the network 155 that may be configured for communications, noting that the satellite may additionally or instead include circuitry for imagery (e.g., spatial, spectral, temporal, radiometric, etc.).

Figure 1 also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL^{®} software, for example, that operates on seismic data, seismic attribute(s), etc. As an example, a workflow may be a process implementable in the OCEAN^{®} framework. As an example, a workflow may include one or more worksteps that access a module such as a plug-in (e.g., external executable code, etc.).

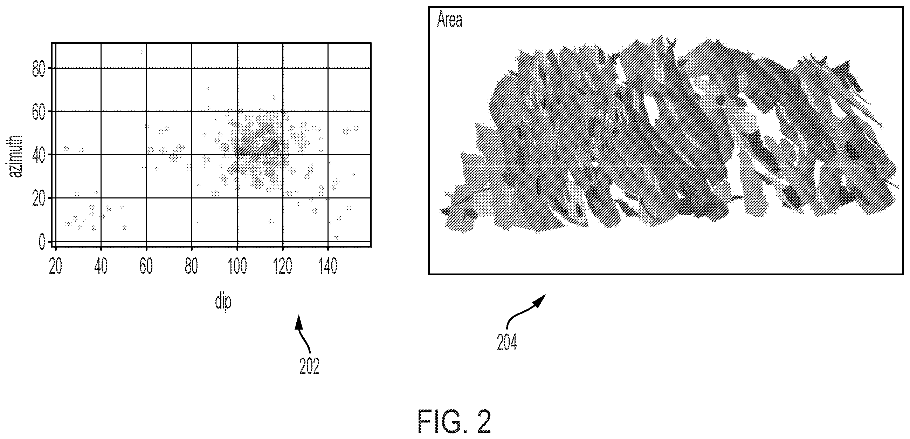

Figure 2 illustrates a descriptor depiction of a set of faults partitioned into groups according to area, and a geometric depiction of the same set of faults with the same partitioning, according to an example. In the descriptor depiction 202, each fault is represented by a circle, with the area of the circle corresponding to the area of the fault, and the position of the circle corresponding to the dip of the fault on the x-axis and the azimuth of the fault on the *y*-axis. The geometric depiction 204 shows the same set of faults as detecting using, e.g., seismic sensing techniques, such as any, or a combination, of those shown and described herein in reference to Figure 1. In both depictions 202, 204, the faults are partitioned into four groups according to area and shaded in four shades accordingly.

According to an example, the set of faults in the depictions 202, 204 may be selected by a user. For example, a user may select the set of faults by highlighting or otherwise selecting a region in a geological area as displayed in a user interface. The display may be of the geometrical depiction 204, for example, prior to the partitioning.

According to some examples, once a set of faults in a geological area is selected, they are automatically partitioned into a plurality of groups. The number of groups in the partition may be pre-selected by a user, and may be, for example, two, three, four, five, six, of generally any integer number. The partitioning may be according to any of a variety and quantity of descriptors, as shown and described herein in reference to Figures 2-7. As shown in the depictions 202, 204 of Figure 2, the faults are partitioned into four groups according to their area.

Any of a variety of partitioning techniques may be used to partition the set of faults. According to some examples, an artificial intelligence unsupervised machine learning technique is used. For example, according to an example, hierarchical clustering, which sorts the faults into groups where descriptors of the faults within a group are more similar than descriptors of faults between groups, is used. According to an example, agglomerative clustering or divisive clustering is used.

According to an example, once partitioned into groups, the set of faults may be displayed to a user such that the groups are apparent. Such a display may by of the descriptor depiction 202 and/or the geometric depiction 204.

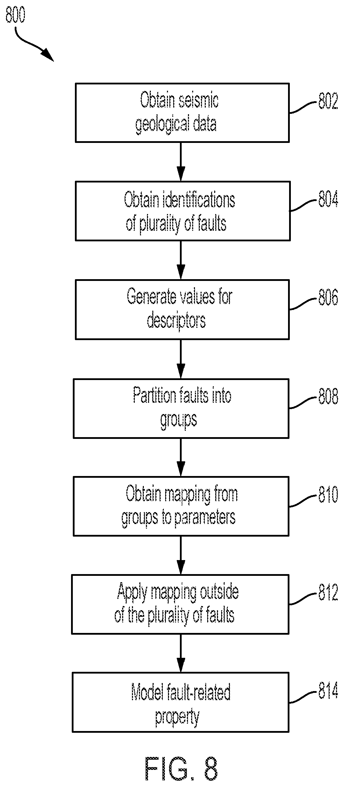

According to an example, the set of faults partitioned into groups is used to obtain a mapping of groups to modeling parameters, and the mapping is then used to assign modeling parameters to faults outside of the set, as shown and described in detail herein, e.g., with respect to Figure 8.

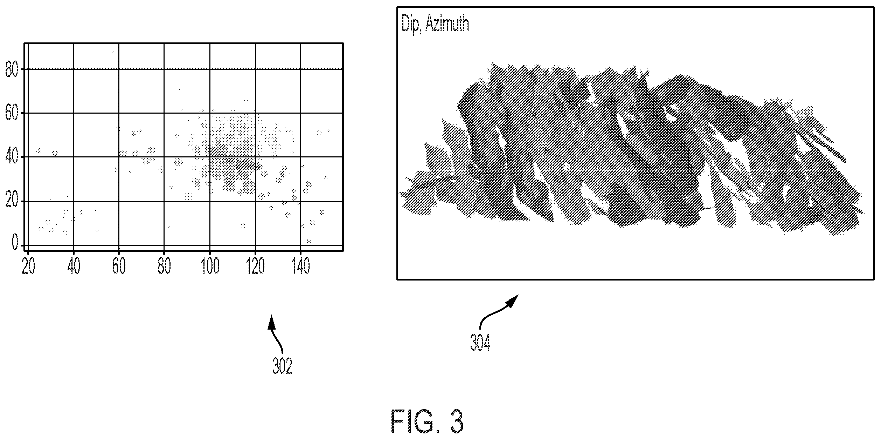

Figures 3-7 show the same set of faults in descriptor depictions 302, 402, 502, 602, and 702, and geometric depictions 304, 404, 504, 604, and 704, as partitioned into four groups according to various different descriptors. Although Figures 2-7 show partitioning into four groups, examples are not so limited; any number of groups may be used. Further, the example descriptors used to partition the faults as shown and described herein in reference to Figures 2-7, any number and type of descriptors may be used, not limited to the examples explicitly disclosed herein.

Figure 3 illustrates a descriptor depiction 302 of a set of faults partitioned into groups according to azimuth and dip, and a geometric depiction 304 of the same set of faults with the same partitioning, according to an example. As in Figure 2, in the descriptor depiction 302, each fault is represented by a circle, with the area of the circle corresponding to the area of the fault, and the position of the circle corresponding to the dip of the fault on the x-axis and the azimuth of the fault on the *y*-axis. The geometric depiction 304 shows the same set of faults as detecting using, e.g., seismic sensing techniques. In both depictions 302, 304, the faults are partitioned into four groups according to the descriptors: azimuth and dip, and shaded in four shades accordingly.

The set of faults and number of groups may be selected, and the partitioning may be performed, in the same manner as described herein in reference to Figure 2. The resulting partition into groups may be displayed and used in the same manner as described herein in reference to Figures 2 and 8.

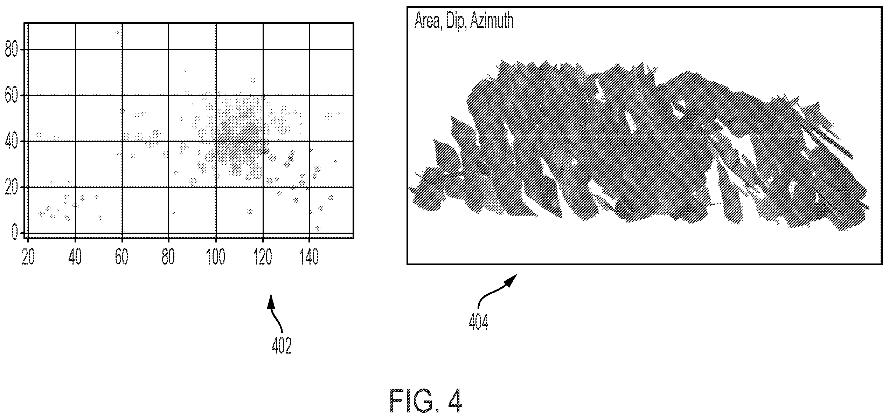

Figure 4 illustrates a descriptor depiction 402 of a set of faults partitioned into groups according to area, azimuth, and dip, and a geometric depiction 404 of the same set of faults with the same partitioning, according to an example. The depictions 402, 404 represent the same faults in the same manner as the depictions 202, 204, respectively, in Figure 2, except that in the depictions 402, 404, the four shades correspond to a partitioning into four groups according to the descriptors: area, azimuth and dip. The set of faults and number of groups may be selected, and the partitioning may be performed, in the same manner as described herein in reference to Figure 2. The resulting partition into groups may be displayed and used in the same manner as described herein in reference to Figures 2 and 8.

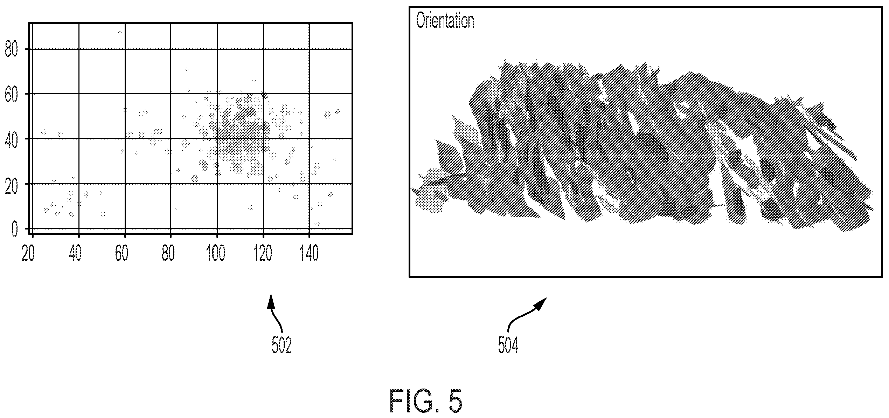

Figure 5 illustrates a descriptor depiction 502 of a set of faults partitioned into groups according to orientation, and a geometric depiction 504 of the same set of faults with the same partitioning, according to an example. The depictions 502, 504 represent the same faults in the same manner as the depictions 202, 204, respectively, in Figure 2, except that in the depictions 502, 504, the four shades correspond to a partitioning into four groups according to orientation. The set of faults and number of groups may be selected, and the partitioning may be performed, in the same manner as described herein in reference to Figure 2. The resulting partition into groups may be displayed and used in the same manner as described herein in reference to Figures 2 and 8.

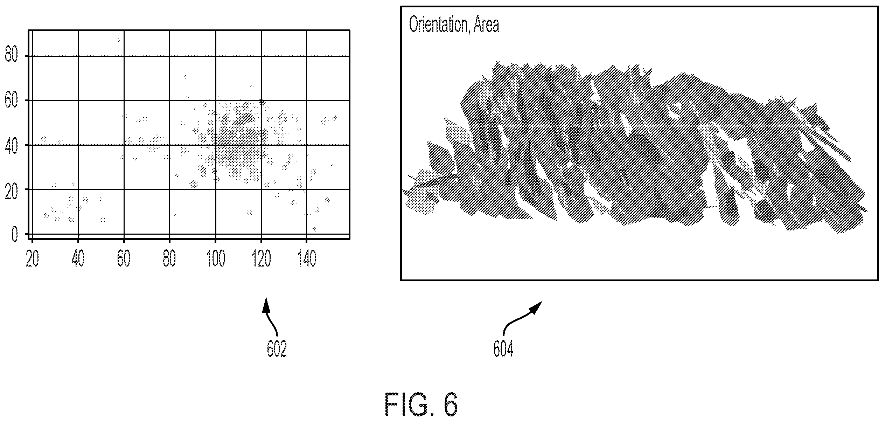

Figure 6 illustrates a descriptor depiction 602 of a set of faults partitioned into groups according to area and orientation, and a geometric depiction 604 of the same set of faults with the same partitioning, according to an example. The depictions 602, 604 represent the same faults in the same manner as the depictions 202, 204, respectively, in Figure 2, except that in the depictions 602, 604, the four shades correspond to a partitioning into four groups according to the descriptors: area and orientation. The set of faults and number of groups may be selected, and the partitioning may be performed, in the same manner as described herein in reference to Figure 2. The resulting partition into groups may be displayed and used in the same manner as described herein in reference to Figures 2 and 8.

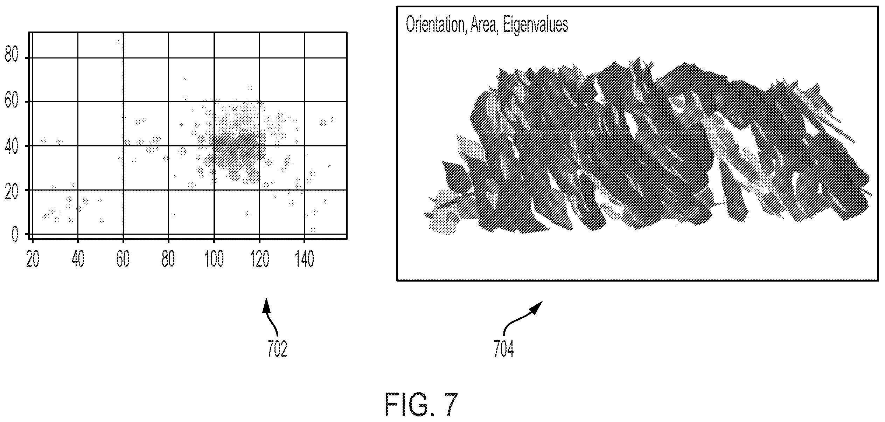

Figure 7 illustrates a descriptor depiction 702 of a set of faults partitioned into groups according to area, orientation, and eigenvalue, and a geometric depiction 704 of the same set of faults with the same partitioning, according to an example. The depictions 702, 704 represent the same faults in the same manner as the depictions 202, 204, respectively, in Figure 2, except that in the depictions 402, 404, the four shades correspond to a partitioning into four groups according to descriptors: area, orientation, and eigenvalue. The set of faults and number of groups may be selected, and the partitioning may be performed, in the same manner as described herein in reference to Figure 2. The resulting partition into groups may be displayed and used in the same manner as described herein in reference to Figures 2 and 8.

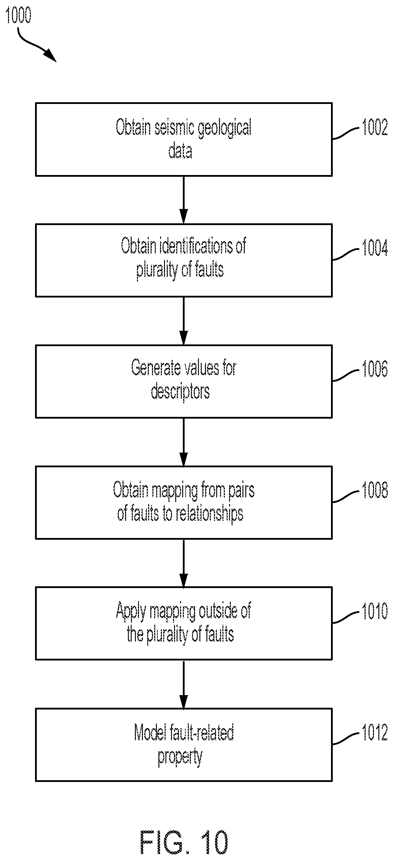

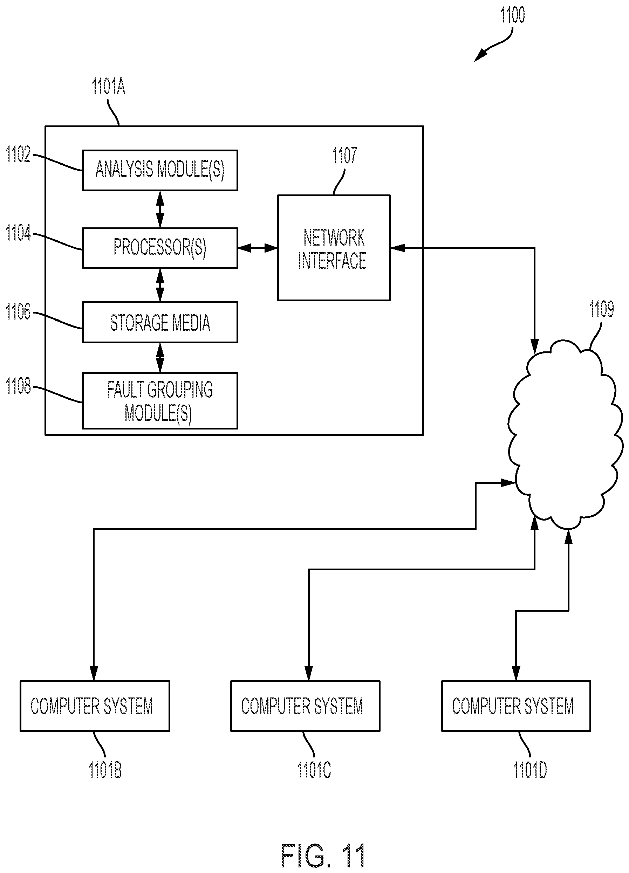

Figure 8 is a flowchart illustrating a computer implemented artificial intelligence method 800 of modeling fault-related properties of a geological region based on automated partitioning, according to the invention when practiced together with the method of Figure 10. The method 800 accepts seismic geological data from any source, such as any, or any combination, of those shown and described herein in reference to Figure 1, and may be practiced using the computing system 1100 as shown and described herein in reference to Figure 11.

At 802, the method 800 obtains seismic geological data for a geological region that includes faults. The seismic data may be obtained using any of the instruments shown and described in reference to Figure 1, for example. The seismic geological data may be obtained directly from such instrument(s), or from electronic storage, by way of non-limiting examples. The geological region may represent an oilfield or portion thereof, by way of non-limiting examples. The geological region may include a plurality of faults, which may include isolated faults or pairs (or more) of faults that are related.

At 804, the method 800 obtains from a user identifications of a plurality of faults in the geological region. The method 800 obtains the identifications from a user. For example, a user may select the set of faults by selecting a region of a displayed geological area on a computer interface, such as a graphical user interface. The displayed geological area may be displayed as a geometrical depiction, such as any of the geometrical depictions 204, 304, 404, 504, 604, or 704, which may be shown without any partition at this stage of the method 800.

At 806, the method 800 automatically generates values for descriptors of respective faults of the plurality of faults. Any number or type of descriptors may be encompassed by this action, including, by way of non-limiting examples, any, or any combination, of: size (e.g., area), azimuth, dip, depth, orientation, and/or eigenvalue. The method may generate values for the descriptor(s) for each fault in the selected geological region. Any of a variety of automated techniques may be used to generate the descriptor values based on the seismic geological data obtained at 802.

At 808, the method 800 automatically partitions faults of the plurality of faults into a plurality of groups according to the values for the descriptors. By way of non-limiting example, an artificial intelligence unsupervised machine learning technique may be used, such as a hierarchical clustering technique, e.g., agglomerative clustering or divisive clustering. According to an example, a user may identify groups manually from a subset of the plurality of faults, and at 808, the method 800 identifies a rule and applies it to the remaining faults of the plurality of faults to group them in the same groups. Defining groups in this manner may allow a high level of reusability of the same rules if new faults are added to the model or if the model is extended such that the same rules apply. According to an example, one or more faults that are not partitionable into any of the groups may be identified, e.g., by displaying their identification(s) in a user interface. According to such an example, a user may manually perform the actions of 810, below, to such outlier faults.

At 810, the method 800 obtains a mapping of respective groups of the plurality of groups to modeling parameter values. Thus, at 810, the method 800 assigns a value for one or more modeling parameters to each group of the partition. In general, the mapping may map groups to values for any of a variety of properties, such as geological characteristics, meta-data, or generally any group-related property including but not limited to the specific modeling parameters set forth below, fault throw, fault connectivity, etc. According to various examples, values for any, or any combination, of the following modeling parameters may be assigned: modeling mesh resolution, smoothing parameter, a concavity/convexity, and/or a fault extrapolation to truncation parameter. The method 800 may obtain values for the modeling parameter(s) using one or more trained machine learning models, which may be previously trained by a training corpus of previously created mappings from groups (or the descriptor values of the groups) to modeling parameter values. Alternately, or in addition, the method 800 may obtain values for the modeling parameters of the mapping from a user, e.g., via a user interface. According to some examples, a mapping is generated automatically using a trained machine learning model, and then a user is provided with an interface through which they may amend the mapping, e.g., by changing one or more assigned modeling parameter values.

At 812, the method 800 applies the mapping to an additional fault in the geological region outside of the plurality of faults, where a modeling parameter value for the additional fault is obtained. The method 800 may apply the mapping to any fault in the geological area that is not in the set of faults identified at 804 (or even any fault outside of the geological area). The additional fault may be selected by a user, or selected automatically by the method 800. The mapping may be applied by determining which group, if any, the additional fault would be included in. By way of non-limiting example, according to an example, the method 800 may determine one or more nearest neighbors for the additional fault according to the descriptor(s) used to partition the selected set of faults. Any other technique for extrapolating the mapping to encompass the additional fault may be used for the actions of 812.

At 814, the method 800 models a fault-related property of the geological region based on the modeling parameter value for the fault outside of the plurality of faults. For example, the modeling parameter(s) for the additional fault may be incorporated into a simulation, such as the simulation component 120 as shown and described herein in reference to Figure 1. In general, the modeling parameters for any, any combination, or all of the faults in the identified plurality of faults as provided by the mapping may be incorporated into the simulation. The method may model any of a variety of fault-related properties of the geological region, including, by way of non-limiting examples, any, or any combination, of: fault type, fault rock property, fault transmissibility, fault aperture, and/or fault displacement.

Subsequent to method 800, one or more actions are taken including directing fluid extraction from the geological region based on the modeling. In other examples, other oilfield exploration or production actions may be taken, such as drilling and/or installing one or more sensors, detectors, actuators, etc.

According to an example not included in the invention, the actions of 808 and 810 are omitted, and instead, such an example maps sets of descriptors directly to modeling parameters. Such a mapping may be generated by assigning a value for one or more modeling parameters to each set of descriptions, instead of to each group of the partition.

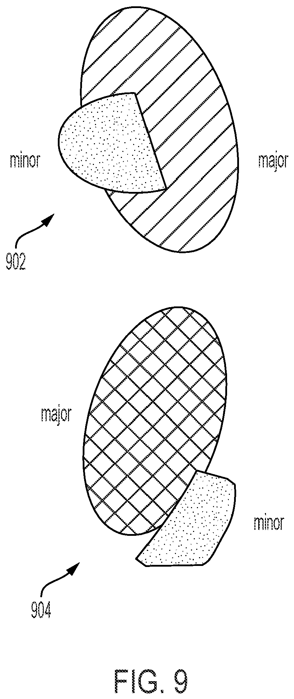

Figure 9 illustrates various fault pair relationships 902, 904 according to an example. In particular, Figure 9 illustrates fault truncation. In general, a major fault truncates a minor fault. The major fault may fully intersect the minor fault, as in 902, or the major fault may partially intersect the minor fault, as in 904. According to an example, when modeling a fault pair in which the major fault partially intersects the minor fault, as in 904, or when characterizing such a fault relationship, the major fault surface may be virtually extended. Such virtual extension may result in a complete cut of the minor fault by the major fault as virtually represented.

Figure 10 is a flowchart illustrating a computer-implemented method 1000 of computer implemented artificial intelligence method of modeling fault-related properties of a geological region based on fault pair relationships, according to the invention. The method 900 accepts seismic geological data from any source, such as any, or any combination, of those shown and described herein in reference to Figure 1, and may be practiced using the computing system 1100 as shown and described herein in reference to Figure 11. The method 1000 is practiced together with the method 800 of Figure 8.

Actions 1002 and 1004 of method 1000 are essentially identical to actions 802 and 804, respectively, as shown and described herein in reference to Figure 8.

At 1006, the method the 1000 automatically generates values for descriptors of respective faults and/or fault pairs of the plurality of faults. Any number or type of descriptors may be encompassed by this action, including, by way of non-limiting examples, any, or any combination, of: size (e.g., area), azimuth, dip, depth, orientation, and/or eigenvalue. In addition, or in the alternative, any, or any combination, of the following descriptors may be encompassed by this action:
- the density of interpretation points;
- the representative number of points that are added to force truncations for truncated fault pairs;
- the geometrical complexity of a modeled fault of a truncated fault pair at the vicinity of the contact; and/or
- the proportion of surface mesh on both sides of a truncation, for a truncated fault pair.

The method generates values for the descriptor(s) for each fault and/or fault pair in the selected geological region. Any of a variety of automated techniques may be used to generate the descriptor values based on the seismic geological data obtained at 1002.

At 1008, the method 1000 obtains a mapping from a plurality of pairs of faults in the geological region to modeling parameters, including fault relationships. The method 800 is combined with the method 1000, and this mapping is a different, second, mapping in comparison to the mapping obtained at 810 for the method 800. The mapping assigns one or more values representing one or more fault relationships to each pair of faults of the plurality of faults in the geographic area identified at 1004. According to various examples, the assigned value(s) may represent a fault relationship (e.g., may identify that a fault pair includes intersecting, truncating or isolated faults), in case of a truncation fault relationship may identify major versus minor faults, and/or may identify above versus below faults. For example, the mapping may map a first fault and a second fault to parameters that define the fault relationship as follows: (first fault, second fault) → (truncated fault pair, first fault = major, second fault = minor, first fault = above, second fault = below). The method 1000 may obtain values for the fault relationship(s) using one or more trained machine learning models, which may be previously trained by a training corpus of previously created mappings from pairs of faults (or the descriptor values of the pairs of faults) to fault relationship value(s). Alternately, or in addition, the method 1000 may obtain values for the mapping from a user, e.g., via a user interface. According to some examples, a mapping is generated automatically using a trained machine learning model, and then a user is provided with an interface through which they may amend the mapping, e.g., by changing one or more assigned fault relationship values.

At 1010, the method applies the mapping of 1008 to an additional pair of faults in the geological region outside of the plurality of pairs of faults identified at 1004. Thus, at 1008, a fault relationship for the pair of faults outside of the plurality of faults is obtained. In general, the method 1000 may apply the mapping to any pair of faults in the geological area, where at least one fault of the pair is not in the set of faults identified at 1004 (or possibly not even in the geological area). The additional pair of faults may be selected by a user, or selected automatically by the method 1000. The mapping may be applied by determining a fault pair in the mapping that is most similar to the additional fault pair, e.g., by comparing descriptors of the additional fault pair to descriptors of the fault pairs in the mapping. By way of non-limiting example, according to an example, the method 800, 1000 determine one or more nearest neighbors for the additional fault pair according to the descriptor(s). Any other technique for extrapolating the mapping to encompass the additional fault pair may be used for the actions of 1010.

At 1012, the method 1000 models a fault-related property of the geological region based on the fault relationship value(s) for the additional fault pair. For example, the fault relationship value(s) for the additional fault pair may be incorporated into a simulation, such as the simulation component 120 as shown and described herein in reference to Figure 1. According to an example, the fault relationship value(s) are incorporated into the same simulation from method 800 that is augmented at 814. In general, the fault relationship values for any, any combination, or all of the fault pairs in the identified fault pairs as provided by the mapping may be incorporated into the simulation. In general, the method 1000 may model any of a variety of fault-related properties of the geological region, including, by way of non-limiting examples, any, or any combination, of: fault type, fault rock property, fault transmissibility, fault aperture, and/or fault displacement.

Subsequent to method 1000, one or more actions are taken including directing fluid extraction from the geological region based on the modeling. In other examples, other oilfield exploration or production actions may be taken, such as drilling and/or installing one or more sensors, detectors, actuators, etc.

The methods of the present disclosure are executed by a computing system. Figure 11 illustrates an example of such a computing system 1100. The computing system 1100 includes a computer or computer system 1101A, which may be an individual computer system 1101A or an arrangement of distributed computer systems. The computer system 1101A includes one or more analysis modules 1102 that are configured to perform various tasks, including one or more methods disclosed herein. To perform these various tasks, the analysis module 1102 executes independently, or in coordination with, one or more processors 1104, which is (or are) connected to one or more storage media 1106. The processor(s) 1104 is (or are) also connected to a network interface 1107 to allow the computer system 1101A to communicate over a data network 1109 with one or more additional computer systems and/or computing systems, such as 1101B, 1101C, and/or 1101D (note that computer systems 1101B, 1101C and/or 1101D may or may not share the same architecture as computer system 1101A, and may be located in different physical locations, e.g., computer systems 1101A and 1101B may be located in a processing facility, while in communication with one or more computer systems such as 1101C and/or 1101D that are located in one or more data centers, and/or located in varying countries on different continents).

A processor may include a microprocessor, microcontroller, processor module or subsystem, programmable integrated circuit, programmable gate array, or another control or computing device.

The storage media 1106 is implemented as one or more computer-readable or machine-readable storage media. Note that while in the example of Figure 11 storage media 1106 is depicted as within computer system 1101A, in some examples, storage media 1106 may be distributed within and/or across multiple internal and/or external enclosures of computing system 1101A and/or additional computing systems. Storage media 1106 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY^{®} disks, or other types of optical storage, or other types of storage devices. Note that the instructions discussed above may be provided on one computer-readable or machine-readable storage medium, or may be provided on multiple computer-readable or machine-readable storage media distributed in a large system having possibly plural nodes. Such computer-readable or machine-readable storage medium or media is (are) considered to be part of an article (or article of manufacture). An article or article of manufacture may refer to any manufactured single component or multiple components. The storage medium or media may be located either in the machine running the machine-readable instructions, or located at a remote site from which machine-readable instructions may be downloaded over a network for execution.

In some examples, computing system 1100 contains one or more fault grouping module(s) 1108. In the example of computing system 1100, computer system 1101A includes the fault grouping module 1108. In some examples, a single fault grouping module may be used to perform some aspects of one or more examples of the methods disclosed herein. In other examples, a plurality of fault grouping modules may be used to perform some aspects of methods herein.

It should be appreciated that computing system 1100 is merely one example of a computing system, and that computing system 1100, while retaining a processor 1104 and storage media 1106, may have more or fewer components than shown, may combine additional components not depicted in the example of Figure 11, and/or computing system 1100 may have a different configuration or arrangement of the components depicted in Figure 11. The various components shown in Figure 11 may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices.

Computational interpretations, models, and/or other interpretation aids may be refined in an iterative fashion; this concept is applicable to the methods discussed herein. This may include use of feedback loops executed on an algorithmic basis, such as at a computing device (e.g., computing system 1100, Figure 11), and/or through manual control by a user who may make determinations regarding whether a given step, action, template, model, or set of curves has become sufficiently accurate for the evaluation of the subsurface three-dimensional geologic formation under consideration.

## Claims

1. A computer implemented machine learning method (800, 1000) of modeling fault-related properties of a geological region, the method comprising:
obtaining (802, 1002) seismic geological data for a geological region (150) that includes faults (153-1);
obtaining (804, 1004) from a user identifications of a plurality of faults (153-1) in the geological region (150);
automatically generating (806, 1006) values for descriptors (202, 204) of respective faults (153-1) of the plurality of faults (153-1);
automatically partitioning (808) faults (153-1) of the plurality of faults (153-1) into a plurality of groups according to the values for the descriptors (202, 204);
obtaining (810) a mapping of respective groups of the plurality of groups to modeling parameter values;
applying (812, 1010) the mapping to a fault (153-1) in the geological region (150) outside of the plurality of faults (153-1), wherein a modeling parameter value for the fault (153-1) outside of the plurality of faults (153-1) is obtained; and
modeling (814, 1012) a fault-related property of the geological region (150) based on the modeling parameter value for the fault (153-1) outside of the plurality of faults (153-1), **characterised in that** the method further comprises:
obtaining (1008) a second mapping from a plurality of pairs of faults (153-1) in the geological region (150) to fault relationships; and
applying (1010) the second mapping to a pair of faults (153-1) in the geological region (150) outside of the plurality of pairs of faults (153-1), wherein a fault relationship for the pair of faults (902, 904) outside of the plurality of faults (153-1) is obtained,
wherein the modeling (1012) is further based on the fault relationship for the pair of faults (902, 904) outside of the plurality of faults (153-1),
and directing fluid extraction from the geological region (150) based on the modeling.

2. The method of claim 1, wherein the obtaining (810) the mapping of respective groups of the plurality of groups to modeling parameter values comprises automatically applying a trained machine learning model to the plurality of groups.

3. The method of claim 1 or 2, wherein the descriptors (202, 204) comprise at least two of: azimuth, dip, area, orientation, or eigenvalue.

4. The method of any preceding claim, wherein the modeling parameter value for the fault (153-1) outside of the plurality of faults (153-1) comprises at least one of: a modeling mesh resolution value, a smoothing parameter value, a concavity/convexity value, or a fault extrapolation to truncation parameter value.

5. The method of any preceding claim, wherein the automatically partitioning (808) comprises applying a clustering algorithm.

6. The method of any preceding claim, further comprising identifying an outlier fault (153-1) in the geological region (150) outside of the plurality of faults (153-1) that is not amenable to the mapping.

7. The method of any preceding claim, wherein the fault relationship for the pair of faults (902, 904) outside of the plurality of faults (153-1) comprises at least one of: a truncation relation, a major/minor identification, or an above/below identification.

8. The method of any preceding claim, wherein the obtaining the second mapping from the plurality of pairs of faults (153-1) in the geological region (150) to fault relationships comprises automatically applying a trained machine learning model to the plurality of groups.

9. A computer system (1101A) comprising an electronic processor (1104) and non-transitory persistent storage (1106), the persistent storage (1106) comprising instructions that when executed by the electronic processor (1104) perform a machine learning method of modeling fault-related properties of a geological region actions by performing a method (800) according to any preceding claim.

10. A non-transitory computer readable medium comprising instructions that, when executed by an electronic processor (1104), configure the electronic processor (1104) to perform a machine learning method of modeling fault-related properties of a geological region by performing a method (800) according to any of claims 1 to 8.

## Patentansprüche

1. Computerimplementiertes maschinelles Lernverfahren (800, 1000) zur Modellierung verwerfungsbezogener Eigenschaften einer geologischen Region, wobei das Verfahren umfasst:
Erhalten (802, 1002) von seismischen geologischen Daten für eine geologische Region (150), die Verwerfungen (153-1) einschließt;
Erhalten (804, 1004) von Identifikationen einer Vielzahl von Verwerfungen (153-1) in der geologischen Region (150) von einem Benutzer;
automatisches Erzeugen (806, 1006) von Werten für Deskriptoren (202, 204) jeweiliger Verwerfungen (153-1) der Vielzahl von Verwerfungen (153-1);
automatisches Partitionieren (808) von Verwerfungen (153-1) der Vielzahl von Verwerfungen (153-1) in eine Vielzahl von Gruppen gemäß den Werten für die Deskriptoren (202, 204);
Erhalten (810) einer Zuordnung von jeweiligen Gruppen der Vielzahl von Gruppen zu Modellierungsparameterwerten;
Anwenden (812, 1010) der Zuordnung auf eine Verwerfung (153-1) in der geologischen Region (150) außerhalb der Vielzahl von Verwerfungen (153-1), wobei ein Modellierungsparameterwert für die Verwerfung (153-1) außerhalb der Vielzahl von Verwerfungen (153-1) erhalten wird; und
Modellieren (814, 1012) einer verwerfungsbezogenen Eigenschaft der geologischen Region (150) basierend auf dem Modellierungsparameterwert für die Verwerfung (153-1) außerhalb der Vielzahl von Verwerfungen (153-1),
**dadurch gekennzeichnet, dass** das Verfahren ferner umfasst:
Erhalten (1008) einer zweiten Zuordnung von einer Vielzahl von Paaren von Verwerfungen (153-1) in der geologischen Region (150) auf Verwerfungsbeziehungen; und
Anwenden (1010) der zweiten Zuordnung auf ein Paar von Verwerfungen (153-1) in der geologischen Region (150) außerhalb der Vielzahl von Paaren von Verwerfungen (153-1), wobei eine Verwerfungsbeziehung für das Paar von Verwerfungen (902, 904) außerhalb der Vielzahl von Verwerfungen (153-1) erhalten wird,
wobei die Modellierung (1012) ferner auf der Verwerfungsbeziehung für das Paar von Verwerfungen (902, 904) außerhalb der Vielzahl von Verwerfungen (153-1) basiert, und Steuern der Fluidextraktion aus der geologischen Region (150) basierend auf der Modellierung.

2. Verfahren nach Anspruch 1, wobei das Erhalten (810) der Zuordnung von jeweiligen Gruppen der Vielzahl von Gruppen zu Modellierungsparameterwerten das automatische Anwenden eines trainierten Modells für maschinelles Lernen auf die Vielzahl von Gruppen umfasst.

3. Verfahren nach Anspruch 1 oder 2, wobei die Deskriptoren (202, 204) mindestens zwei umfassen von:
Azimut, Neigung, Fläche, Ausrichtung oder Eigenwert.

4. Verfahren nach einem der vorstehenden Ansprüche, wobei der Modellierungsparameterwert für die Verwerfung (153-1) außerhalb der Vielzahl von Verwerfungen (153-1) mindestens eines der Folgenden umfasst: einen Modellierungsnetzauflösungswert, einen Glättungsparameterwert, einen Konkavitäts-/Konvexitätswert oder einen Verwerfungsextrapolation-zu-Trunkierung-Parameterwert.

5. Verfahren nach einem der vorstehenden Ansprüche, wobei das automatische Partitionieren (808) das Anwenden eines Clustering-Algorithmus umfasst.

6. Verfahren nach einem der vorstehenden Ansprüche, ferner umfassend das Identifizieren einer Ausreißerverwerfung (153-1) in der geologischen Region (150) außerhalb der Vielzahl von Verwerfungen (153-1), die für die Zuordnung nicht zugänglich ist.

7. Verfahren nach einem der vorstehenden Ansprüche, wobei die Verwerfungsbeziehung für das Paar von Verwerfungen (902, 904) außerhalb der Vielzahl von Verwerfungen (153-1) mindestens eines der Folgenden umfasst: eine Trunkierungsbeziehung, eine Haupt-/Neben-Identifikation oder eine Oben-/Unten-Identifikation.

8. Verfahren nach einem der vorstehenden Ansprüche, wobei das Erhalten der zweiten Zuordnung von der Vielzahl von Paaren von Verwerfungen (153-1) in der geologischen Region (150) zu Verwerfungsbeziehungen das automatische Anwenden eines trainierten Modells für maschinelles Lernen auf die Vielzahl von Gruppen umfasst.

9. Computersystem (1101A), umfassend einen elektronischen Prozessor (1104) und einen nichtflüchtigen persistenten Speicher (1106), wobei der persistente Speicher (1106) Anweisungen umfasst, die, wenn sie von dem elektronischen Prozessor (1104) ausgeführt werden, Aktionen eines maschinellen Lernverfahrens zum Modellieren von verwerfungsbezogenen Eigenschaften einer geologischen Region durchführen, indem ein Verfahren (800) nach einem der vorstehenden Ansprüche durchgeführt wird.

10. Nichtflüchtiges computerlesbares Medium, das Anweisungen umfasst, die, wenn sie von einem elektronischen Prozessor (1104) ausgeführt werden, den elektronischen Prozessor (1104) konfigurieren, um ein Verfahren des maschinellen Lernens zum Modellieren verwerfungsbezogener Eigenschaften einer geologischen Region durch Durchführen eines Verfahrens (800) nach einem der Ansprüche 1 bis 8 durchzuführen.

## Revendications

1. Procédé d'apprentissage automatique mis en œuvre par ordinateur (800, 1000) de modélisation de propriétés liées aux défauts d'une région géologique, le procédé comprenant :
l'obtention (802, 1002) de données géologiques sismiques pour une région géologique (150) qui comporte des défauts (153-1) ;
l'obtention (804, 1004) à partir d'un utilisateur d'identifications d'une pluralité de défauts (153-1) dans la région géologique (150) ;
la génération automatique (806, 1006) de valeurs pour des descripteurs (202, 204) de défauts respectifs (153-1) de la pluralité de défauts (153-1) ;
le partitionnement automatique (808) de défaillances (153-1) de la pluralité de défaillances (153-1) en une pluralité de groupes selon les valeurs des descripteurs (202, 204) ;
l'obtention (810) d'une mise en correspondance de groupes respectifs de la pluralité de groupes avec des valeurs de paramètres de modélisation ;
l'application (812, 1010) de la cartographie à une faille (153-1) dans la région géologique (150) à l'extérieur de la pluralité de failles (153-1), dans lequel une valeur de paramètre de modélisation pour la faille (153-1) à l'extérieur de la pluralité de failles (153-1) est obtenue ; et
la modélisation (814, 1012) d'une propriété liée à une défaillance de la région géologique (150) sur la base de la valeur de paramètre de modélisation pour la défaillance (153-1) à l'extérieur de la pluralité de failles (153-1),
**caractérisé en ce que** le procédé comprend en outre :
l'obtention (1008) d'une seconde cartographie d'une pluralité de paires de failles (153-1) dans la région géologique (150) à des relations de failles ; et
l'application (1010) de la seconde cartographie à une paire de failles (153-1) dans la région géologique (150) à l'extérieur de la pluralité de paires de failles (153-1), dans lequel une relation de faille pour la paire de failles (902, 904) à l'extérieur de la pluralité de failles (15, 3-1) est obtenue,
dans lequel la modélisation (1012) est en outre basée sur la relation de défaillance pour la paire de failles (902, 904) à l'extérieur de la pluralité de failles (153-1), et la direction de l'extraction de fluide de la région géologique (150) sur la base de la modélisation.

2. Procédé selon la revendication 1, dans lequel l'obtention (810) de la mise en correspondance de groupes respectifs de la pluralité de groupes avec des valeurs de paramètres de modélisation comprend l'application automatique d'un modèle d'apprentissage automatique entraîné à la pluralité de groupes.

3. Procédé selon la revendication 1 ou 2, dans lequel les descripteurs (202, 204) comprennent au moins deux éléments parmi :
l'azimut, le pendage, la surface, l'orientation ou la valeur propre.

4. Procédé selon l'une quelconque revendication précédente, dans lequel la valeur de paramètre de modélisation pour le défaut (153-1) en dehors de la pluralité de défauts (153-1) comprend au moins l'une parmi : une valeur de résolution de maillage de modélisation, une valeur de paramètre de lissage, une valeur de concavité/convexité, ou une extrapolation de défaut à la valeur de paramètre de troncature.

5. Procédé selon l'une quelconque revendication précédente, dans lequel le partitionnement automatique (808) comprend l'application d'un algorithme de regroupement.

6. Procédé selon l'une quelconque revendication précédente, comprenant en outre l'identification d'une faille aberrante (153-1) dans la région géologique (150) à l'extérieur de la pluralité de failles (153-1) qui ne se prête pas à la cartographie.

7. Procédé selon l'une quelconque revendication précédente, dans lequel la relation de défaut pour la paire de défauts (902, 904) à l'extérieur de la pluralité de défauts (153-1) comprend au moins l'une parmi : une relation de troncature, une identification majeure/mineure, ou une identification supérieure/inférieure.

8. Procédé selon l'une quelconque revendication précédente, dans lequel l'obtention de la seconde cartographie à partir de la pluralité de paires de défauts (153-1) dans la région géologique (150) aux relations de défauts comprend l'application automatique d'un modèle d'apprentissage automatique entraîné à la pluralité de groupes.

9. Système informatique (1101A) comprenant un processeur électronique (1104) et un stockage persistant non transitoire (1106), le stockage persistant (1106) comprenant des instructions qui, lorsqu'elles sont exécutées par le processeur électronique (1104), effectuent un procédé d'apprentissage automatique de modélisation de propriétés liées aux défauts d'actions de région géologique en effectuant un procédé (800) selon l'une quelconque revendication précédente.

10. Support lisible par ordinateur non transitoire comprenant des instructions qui, lorsqu'elles sont exécutées par un processeur électronique (1104), configurent le processeur électronique (1104) pour effectuer un procédé d'apprentissage automatique de modélisation de propriétés liées aux défauts d'une région géologique en effectuant un procédé (800) selon l'une quelconque des revendications 1 à 8.
